# EUROPÄISCHE PATENTSCHRIFT

(11) **EP 2 414 552 B1**
(45) Veröffentlichungstag und Bekanntmachung des Hinweises auf die Patenterteilung: **26.10.2016**
(21) Anmeldenummer: 10714606.0
(22) Anmeldetag: 02.04.2010
(51) Int. Cl.: C21D 8/06, C22C 38/02, C22C 38/04

(54) **KUGELZAPFEN AUS BAINITISCHEN STÄHLEN FÜR PKW UND LEICHTE LKW**
BALL PINS MADE OF BAINITIC STEELS FOR PASSENGER CAR AND LIGHT COMMERCIAL VEHICLE
PIVOTS À ROTULE EN ACIERS À STRUCTURE BAINITIQUE POUR DE VÉHICULES À USAGE PERSONNEL ET DE VÉHICULES UTILITAIRES LÉGERS

(30) Priorität: 03.04.2009 DE 102009016079
(43) Veröffentlichungstag der Anmeldung: 08.02.2012
(73) Patentinhaber: Swiss Steel AG, 6020 Emmenbrücke (CH)
(72) Erfinder: KRUSE, Jochen, 49088 Osnabrück (DE); URLAU, Ulrich, CH-6010 Kriens (CH); HASLER, Stephan, CH-4806 Wikon (CH)
(74) Vertreter: Schmauder & Partner AG Patent- & Markenanwälte VSP
(86) Internationale Anmeldenummer: PCT/EP2010/054474
(87) Internationale Veröffentlichungsnummer: WO 2010/112611

(56) Entgegenhaltungen:
- EP-A1- 2 199 422
- EP-B1- 1 565 587
- DE-A1-102004 022 248
- JP-A- 9 209 074
- US-A- 5 919 415

## Beschreibung

Die Erfindung betrifft Kugelzapfen aus einem Stahl mit bainitischem Gefüge und ein Verfahren zur Herstellung derartiger Kugelzapfen.

Kugelgelenke sind die zentralen Bauteile im PKW und NKW Achsen. Sie gestatten es, dass sich zum Beispiel die Räder lenken und einfedern lassen. Zum Aufbau von Kugelgelenken siehe auch: Nikolaus Fecht: "Komponenten für Fahrwerk und Lenkung", Verlag Moderne Industrie, Band 152. Kugelzapfen befinden sich ferner in Lenkgestängen, Zug- und Druckstreben und Spurstangen von Kraftfahrzeugen. Grundlegende Informationen über Kugelzapfen können zum Beispiel der DE 10 2005 019 559 A1 und der DE 100 23 602 C2 entnommen werden.

Kugelzapfen dürfen nicht mit Schrauben verwechselt werden. Die Anforderungen an Kugelzapfen sind völlig andere als an Schrauben. Von der Eignung eines Stahls zur Schraubenfertigung kann nicht auf die Eignung zur Herstellung von Kugelzapfen geschlossen werden. Das Anforderungsprofil für Schrauben ist z. B. in ISO 898-1 und ISO 898-5 benannt. Schrauben werden ausschließlich auf Zug belastet. Der statischen Last kann eine vom Betrag her deutlich geringere wechselnde Belastung überlagert sein, so dass sich resultierend eine schwellende Belastung (Unter-Spannung zu Ober-Spannung größer 0,5) ergibt. Die Prüfung an Schrauben geschieht bei Raumtemperatur (RT) oder bei erhöhten Temperaturen.

Das Lastenheft eines Kugelzapfens hingegen ist Hersteller und Fahrzeug abhängig. Einen Überblick über die Anforderungen gibt z. B. das "AK-LH 14 Arbeitskreis-Lastenheft für Fahrwerksgelenke".

Der vordere kugelige Bereich des Kugelzapfens, der aus der Befestigung (Hebelauge) herausragt, wird auf vielfältige Weise statisch, zyklisch und dynamisch belastet. Die statischen Lasten sind Zug-, Druck- und Biegebelastungen, die zyklischen Lasten sind ebenfalls Zug-, Druck- und Biegebelastungen, häufig mit wechselnden Spannungsverhältnissen (Unter-Spannung zu Ober-Spannung gleich -1), die dynamischen Lasten sind kurze harte Schläge, wie sie z. B. vom Überfahren einer Schwelle oder eines Bordsteins herrühren können. Diese Belastungen werden durch den PKW Hersteller (OEM) geprüft, bei den Kugelzapfenherstellern erfolgt eine Vorab-Prüfung in dem so genannten "Fallhammer-Test".

EP 1 565 587 offenbart einen Stahl mit bainitischer Gefügestruktur für PKW-Kugelzapfen mit geringem Kohlenstoffgehalt enthaltend u.a. 0.4-0.10 Gew.-% Nb, 0.10-0.35 Gew.-% Mo sowie 1.3-2.0 Gew.-% Mn.

Kugelzapfen werden in einem Temperaturbereich von -40 °C bis +80 °C, im Unterschied zu Schrauben, geprüft. Die ISO 898 für Schrauben sieht explizit nur eine Prüfung bei Raumtemperatur vor. Besonders im Fallhammertest hat sich gezeigt, dass die Prüfung bei -40 °C die kritische Prüfung ist und von guten Ergebnissen bei Raumtemperatur nicht auf die Eignung bei -40 °C geschlossen werden kann. Die Spröd-Duktil-Übergangstemperatur von Stählen ist nicht nur von der chemischen Zusammensetzung, sondern auch von den Prozessparametern der Herstellung des Stahls abhängig. Kugelzapfen nach dem Stand der Technik bestehen in der Regel aus dem Vergütungsstahl 41 Cr4 oder 42CrMo4 (mit ca. 1 Gew-% Cr bzw. 1 Gew.-% Cr und ca. 0,25 Gew-% Mo). Im asiatischen Raum werden sie ferner auch aus Einsatzstählen wie zum Beispiel 20NiCrMo2-2 hergestellt. Der Stahl wir erschmolzen und im Strang zu "Knüppeln" abgegossen. Die Knüppel werden dann zu Walzdraht (Ringen oder englisch: "coil") im Durchmesserbereich von 10 mm bis 30 mm warmgewalzt. Damit aus dem Draht in einer mehrstufigen Presse die Kugelzapfen herstellbar sind, muss der Walzdraht geglüht werden, sodass kugeliger Zementit (GKZ) entsteht. Dazu wird der Walzdraht gebeizt, in einem Phosphatbad beschichtet, gezogen, rekristallisierend geglüht, erneut gebeizt und phosphatiert. Anschließend erfolgt ein Ziehen des Drahtes auf den Enddurchmesser mit enger Toleranz. In einer mehrstufigen Presse werden aus dem gezogenen Draht die Kugelzapfenpresslinge hergestellt. Zur Einstellung der gewünschten Festigkeit müssen die Kugelzapfenpresslinge vergütet werden, dazu werden sie auf ca. 900 °C erwärmt (austenitisiert), schnell in Wasser oder Öl abgeschreckt (gehärtet) und erneut auf Temperaturen von 500 °C bis 600 °C erwärmt (angelassen). Der Stahl liegt nun in einem Vergütungsgefüge (angelassener Martensit) vor. Die spanende beziehungsweise spanlose Bearbeitung der Kugelzapfen erfolgt anschließend. Kugelzapfen können natürlich auch auf andere Art und Weise hergestellt werden. Weitere Informationen siehe auch: Jochen Kruse: "Spurstangenkomponenten, Werkstoffe und Herstellung im Wandel der Zeit", Sächsische Fachtagung für Umformtechnik 2007.

Sollen die Kugelzapfen korrosionsgeschützt sein, werden sie nach der Herstellung nitrocarboriert. Dabei diffundieren Kohlenstoff und Stickstoff bei Temperaturen zwischen 450 °C und 600 °C in die Zapfenrandschicht ein. Hierdurch wird der äußere Bereich des Stahls hart und korrosionsresistent.

Die im asiatischen Raum gebräuchlichen Einsatzstähle werden nach der spanenden Bearbeitung für längere Zeit (10 Stunden bis 2 Tage) bei Temperaturen von 850 °C bis 1000 °C in kohlenstoffabgebenden Medien zur Aufkohlung geglüht und anschließend ebenfalls schnell in Wasser oder Öl gehärtet und angelassen.

Bei einer speziellen Art von Kugelzapfen, den Langschaft-Kugelzapfen, wie sie als Spurstangenverbindung eingesetzt werden, wird seit ca. 10 Jahren als Werkstoff der 30MnVS6 eingesetzt. Dieser Stahl wird prinzipiell so hergestellt wie oben beschrieben, allerdings erfolgt nach dem Warmwalzen aus der Walzhitze eine gezielte Abkühlung. Dabei scheiden sich aus dem ferritisch / perlitischen Gefüge fein verteilte Vanadium-Karbid-Ausscheidungen aus. Auf ein GKZ-Glühen der Ringe kann verzichtet werden. Die aus diesem Stahl gepressten Rohlinge werden nicht mehr gehärtet beziehungsweise vergütet. Die Bauteilfestigkeit resultiert aus der Grundfestigkeit des Drahtes und der Kaltverformung beim Pressen.

Nachteilig bei den Lösungen nach dem Stand der Technik ist bei der Verwendung der Vergütungsstähle, dass die GKZ-Glühung energie- und zeitaufwändig ist und dass die Bauteile ebenfalls energie- und zeitaufwändig vergütet werden müssen.

Aufgrund der Kohlenstoffgehalte über 0,2 Gew.-% lassen sich die Vergütungsstähle im vergüteten Zustand, nach den allgemeinen schweißtechnischen Regeln, nicht schweißen. Das schränkt die Herstellbarkeit von Kugelzapfen deutlich ein.

Ferner ist, aufgrund des hohen Kohlenstoffgehalts, die Umformbarkeit beziehungsweise Pressbarkeit der GKZ geglühten Ringe deutlich eingeschränkt. So kann es beim Pressen wiederholt zu Aufplatzungen besonders bei der Einbringung von Werkzeugangriffsflächen, wie zum Beispiel einem Innensechsrund oder einem Innensechskant kommen.

Bei der Verwendung des Ausscheidungsgehärteten Stahls 30MnVS6 wird zwar die Vergütungswärmebehandlung eingespart, allerdings ist die Zähigkeit des Stahls, gemessen als Kerbschlagarbeit gemäß DIN 50045-1 mit V-Kerb deutlich geringer als bei den Vergütungsstählen. Daher werden die Stähle nur bei Zapfen eingesetzt die ausschließlich auf Zug/Druck belastet sind.

Der Stahl 30MnVS6 lässt sich, nach den allgemeinen schweißtechnischen Regeln, ebenfalls nicht schweißen. Ferner ist seine Umformbarkeit beziehungsweise Pressbarkeit noch geringer als die der Vergütungsstähle. In diesen Stahl kann kein Innenangriff (Innensechsrund oder einem Innensechskant) gepresst werden.

Andere gemeinhin als mikrolegierte Stähle bezeichnete Stahltypen besitzen immer ein ferritisch / perlitisches Gefüge. Reduziert man den Kohlenstoffgehalt auf unter 0,2 Gew.-% so sind die Stähle dann zwar schweißbar, aber die Festigkeit, die aus der Kaltumformung resultiert, ist für die Kugelzapfen zu gering. Ferner sind sie nach dem Nitrocarborieren extrem weich.

Stähle aus bainitischem Gefüge sind bekannt und werden sehr ausführlich in: "Bainite in steels - Transformations, Microstructure and Properties", second edition, H. K. D. H. Bhadeshia, IOM Communications Ltd, 1 Carlton House Terrace, London SW1Y 3DB, Book 0735 beschreiben.

Bislang wurden die Stähle mit bainitischem Gefüge allerdings ausschließlich zu Blechen verarbeitet und waren kommerziell nicht zur Drahtherstellung verfügbar. Eine Herstellung von Drähten stieß herstellungsbedingt an nicht überwindbare Grenzen, denn Bleche können langsamer (ca. 40 - 50 km/h) warm gewalzt und somit schneller abgekühlt werden, als Draht, dessen maximale Walzgeschwindigkeit bei etwa 150 bis 200 km/h liegt. Deshalb konnte der Fachmann in der Vergangenheit auch keine Versuche unternehmen, Kugelzapfen durch Kaltfließpressen herzustellen.

Ein genereller Nachteil von bainitischen Stählen, insbesondere für die Anwendung beim Kaltmassivumformen, war in der Vergangenheit das Auftreten von Zementit (Fe3C-Ausscheidungen), welcher durch Abkühlung aus dem Austenit entsteht. Diese Phase ist spröde und kann insbesondere beim Kaltmassivumformen zu einer Rissinitiierung und somit zum Versagen führen.

Aufgabe der vorliegenden Erfindung war es, die genannten Nachteile des Stands der Technik zu überwinden, insbesondere Kugelzapfen mit einer hohen Festigkeit in Kombination mit einer guten Schweißbarkeit und guten Zähigkeiten herzustellen.

Gelöst wird die Aufgabenstellung mit den Merkmalen der unabhängigen Patentansprüche.

Überraschender Weise wurde gefunden, dass Kugelzapfen aus einem Stahl mit bainitischem Gefüge den Nachteil des Stands der Technik überwinden. Ein erfindungsgemässer Stahl gemäß Anspruch 1 hat folgende Zusammensetzung in Gewichts-%:
- Eisen, sowie
- 0,05 bis 0,15 Kohlenstoff
- 0,10 bis 0,4 Silizium
- 1,0 bis 2,5 Mangan
- 0,0015 (15 ppm) bis 0,0120 (120 ppm) Bor
- in Summe 0,06 bis 0,30 der Elemente Vanadium, Niob, Titan

0.06 bis 0.15 Titan, bis zu 0.08 Mo, bis zu 0.25 Cr, bis zu 0.25 Al, bis zu 0.25 Ni, bis zu 0.25 Cu und kleiner als 0.012 N₂ Erfindungsgemäß können damit Kugelzapfen zur Verfügung gestellt werden, deren Werkstoff deutlich weniger teures Molybdän und/oder Chrom enthält als die klassischen Vergütungsstähle 41Cr4 bzw. 42CrMo4. Ferner kann vollständig auf das aufwändige GKZ-Glühen verzichtet werden, wobei die erforderlichen Festigkeitswerte trotzdem erreicht werden, als ob ein GKZ-Glühen angewendet worden wäre. Ein Vergüten des Stahls kann ebenfalls entfallen. Die Herstellung der Kugelzapfen nach der Erfindung ist damit wesentlich einfacher und kostengünstiger, als bisher. Zudem wurde durch den Einsatz bainitischer Stähle für Drahtmaterial ein lange bestehendes Vorurteil überwunden.

Zudem war überraschend, dass durch den Einsatz eines bainitischen Stahls plötzlich auch problemlos das Pressen von Innenangriffen möglich wurde, was vorher nicht abzusehen war. Circa 75% aller Kugelzapfen besitzen Innenangriffe, weshalb dies von Bedeutung für die Ausführung der Lehre ist, denn die erfindungsgemäßen Kugelzapfen eignen sich insbesondere zum Einsatz im Fahrzeugbau. Hier ist ihr Einsatz beispielsweise in Lenkgestängen, Zug- und Druckstreben, Koppelstangen beziehungsweise Stabilisatoranbindungen, Zwei- und Dreipunkt-Querlenkern und Spurstangen möglich.

Selbstverständlich kann der bainitische Stahl noch weitere Legierungselemente in größeren oder kleineren Mengen enthalten. Schon herstellungsbedingt sind weitere Legierungsbestandteile wie z. B. Phosphor, Schwefel, Kupfer und Stickstoff üblich.

Ferner sind weitere Ausgestaltungen der Erfindung in den Unteransprüchen wiedergegeben.

Ein Stahl mit bainitischem Gefüge gemäß Anspruch 1 hat folgende Zusammensetzung in Gewichtsprozent
- Eisen, sowie
- 0,06 bis 0,12 Kohlenstoff
- 0,15 bis 0,3 Silizium
- 1,4 bis 2,0 Mangan
- 0,06 bis 0,15 Titan
- 0,0015 (15 ppm) bis 0,0120 (120 ppm) Bor
- in Summe 0,03 bis 0,22 der Elemente Niob und Vanadium
- bis 0,012 Stickstoff (120 ppm).

Es ist jedoch entsprechend einer vorteilhaften Ausgestaltung der Erfindung gemäß Anspruch 1 auch möglich, dass eine oder mehrere der folgenden Elemente (Angabe in Gewichtsprozent) enthalten sind:
- maximal 0,25 Nickel
- maximal 0,30 Summe Nickel und Kupfer
- maximal 0,25 Chrom
- maximal 0,05 Aluminium

Gegenstand der Erfindung ist ferner ein Verfahren zur Herstellung von Kugelzapfen aus einem Stahl mit bainitischem Gefüge.

Das Verfahren umfasst mindestens die Schritte:
- Schmelzen des Stahls
- Gießen des Stahls im Block- oder Strangguss
- Warmwalzen zum Ring
- Gesteuerte Abkühlung nach dem Warmwalzen
- Kaltziehen des Ringes
- Fließpressen

Der Stahl wird erschmolzen, zu Knüppeln abgegossen, zu Ringen warmgewalzt und aus der Walzhitze gezielt, mit Abkühlraten größer 1 K/s zwischen 800 und 500°C, abgekühlt, so dass Bainit entsteht. Dabei kann der Stahl entweder konventionell normalisierend gewalzt werden mit einer Endwalztemperatur von um 1000°C, oder thermomechanisch mit einer abgesenkten Endwalztemperatur von um 800°C. Für eine Definition der Begriffe "normalisierend" und "thermomechanisch" wird auf die Norm DIN EN 10025-2 verwiesen.

Der warmgewalzte Ring wird ohne Zwischenglühung kaltgezogen und anschließend werden daraus auf einer mehrstufigen Presse die Kugelzapfenrohlinge gepresst. Nach dem Pressen erfolgt ggf. die mechanische Bearbeitung der Rohlinge. Die Rohlinge erhalten ihre Festigkeit aus der Grundfestigkeit des Drahtes und der Kaltverformung beim Pressen. Sie müssen zur Einstellung der Festigkeit nicht mehr vergütet werden.

Für den Fachmann hat sich in überraschender Weise gezeigt, dass sich Kugelzapfen auch ohne aufwendige GKZ-Behandlung von Draht in einer mehrstufigen Presse pressen lassen. Auf die teure und aufwändige GKZ-Behandlung kann verzichtet werden. Ferner war es für den Fachmann überraschend, dass die Bauteile nach dem Pressen die gleich hohe Festigkeit aufweisen, wie sonst nur die vergüteten Bauteile. Bei Verwendung des erfindungsgemäßen Stahls kann somit auf das teure und aufwändige Vergüten verzichtet werden.

Bevorzugt erfolgt die Rohlingsherstellung durch ein mehrstufiges Kaltumformverfahren, in dem aus dem Draht der Rohling gepresst wird.

Bevorzugt erfolgt nach dem Warmwalzen ein Kaltzug von größer als 5% zur Einstellung der Drahtfestigkeit.

Überraschenderweise wurde gefunden, dass ein verhältnismäßig hoher Gehalt von grösser 0.06 Gew.-% eines Metalles M, wobei M = Vanadium, Niob oder Titan, oder eine Kombination dieser drei Metalle mit in Summe mehr als 0.06 Gew.-%, in einem Stahl der oben genannten Basiszusammensetzung, bevorzugt im Zusammenhang mit thermomechanischem Walzen und beschleunigter Abkühlung nach dem Walzen, zu einer Zementit-freien Mikrostruktur führt. Diese besteht überwiegend aus einem bainitischen Sekundärgefüge mit Ausscheidungen des Typs MX, wobei X ein interstitielles Element wie z.B. Kohlenstoff und/oder Stickstoff ist, und weist einen Anteil von insgesamt kleiner 20 Volumenprozent Restaustenit- oder Martensitbereiche der Größe 2 bis 3 µm. Bei der MX-Ausscheidung kann es sich demnach um ein Karbid, Nitrid oder Karbonitrid handeln. Generell gibt es zwei Typen von MX-Ausscheidungen: primäre (groß oder grob) und sekundäre (klein oder fein) MX-Ausscheidungen. Primäre MX-Ausscheidungen in Stählen sind gewöhnlich größer als 50 nm während sekundäre MX-Ausscheidungen normalerweise kleiner 20 nm groß sind. Die Bedingungen, unter welchen verschiedene Metallatome MX-Ausscheidungen bilden, hängen von der chemischen Zusammensetzung des Stahls ab.

Bei Verwendung von Gehalten an Vanadium, Niob und/oder Titan von grösser 0.06 Gew-% kann mittels Ausscheidungshärtung mit feinen MX-Ausscheidungen (z.B. TiC) in der bainitischen Struktur die Festigkeit des Drahtes gezielt um bis zu 200 MPa erhöht werden, wobei gleichzeitig der Kohlenstoffgehalt auf einem relativ tiefen Niveau gehalten werden kann. Dieser tiefere Kohlenstoffgehalt begünstigt technologische Eigenschaften wie Kaltumformbarkeit, Duktilität, Zähigkeit und Schweißbarkeit. Insbesondere das Legieren mit höheren Gehalten an Titan und/oder Niob scheint, bevorzugt im Zusammenhang mit thermomechanischem Walzen und beschleunigter Abkühlung nach dem Walzen, einen günstigen Einfluss zu haben auf die Bildung der oben beschriebenen bainitischen Gefügestruktur und führt zu einer sehr wirksamen Ausscheidungshärtung. Für eine Definition des Begriffs "Ausscheidungshärtung" wird auf die Norm DIN EN 10267 verwiesen. Besonders notwendig ist die Verwendung eines Titangehaltes im Bereich von 0,06 bis 0,15 Gew.-%.

Insbesondere die Elemente Titan und Niob haben den weiteren Effekt, dass die während und nach dem Walzen ausgeschiedenen feinen Ausscheidungen die statische und dynamische Rekristallisation verzögern, wodurch ein feines Austenitkorn vor der Umwandlung von Austenit zu Bainit ensteht, was schliesslich zu einer feinen Gefügestruktur im fertigen Walzprodukt führt.

Eine solche bainitische Gefügestruktur mit geringerem Kohlenstoffgehalt, bei welcher die spröden Zementitausscheidungen durch fein verteilte MX-Karbide und einer fein ausgebildeten duktilen Restphase (angelassener Martensit/Restaustenit) ersetzt sind, sollte das ideale Gefüge für die Kaltmassivumformung ohne Wärmebehandlung darstellen (hohe Festigkeit und trotzdem gute Duktilität). Die kritische Umformung, welche zu Fehlern führen kann, nimmt mit dem Anteil und der Grösse der Restphase (hier angelassener Martensit/Restaustenit) ab. Ohne sich durch die Theorie zu beschränken, wird vermutet, dass weniger Spannungsspitzen an den Grenzflächen zweier Phasen aufgrund unterschiedlicher mechanischer Eigenschaften der benachbarter Phasen entstehen.

Die für die Kaltmassivumformung hervorragenden technologischen Eigenschaften sind auf die besondere Gefügestruktur zurückzuführen.

Vorteilhafter Weise erfolgt das Walzen mit einer Endwalztemperatur um 800°C und die Abkühlung des Drahtes nach dem Warmwalzen mit Abkühlgeschwindigkeiten größer 1 K/s, insbesondere größer 3 K/s. Hieraus ergibt sich, dass die bei -40 °C gemessene Kerbschlagarbeit an ISO-V-Proben, die nach dem Verfahrensschritt der gesteuerten Abkühlung und vor dem Verfahrensschritt des Kaltziehens entnommen werden, größer 60 J ist.

Die Erfindung wird durch folgende Beispiele näher erläutert:

### Beispiel 1

Es wurde eine Legierung hergestellt, die folgende Zusammensetzung hatte:
- 0,07 Gew.-% Kohlenstoff
- 1,86 Gew.-% Mangan
- 0,21 Gew.-% Silizium
- 0,007 Gew.-% Phosphor
- 0,007 Gew.-% Schwefel
- 0,10 Gew.-% Nickel
- 0,11 Gew.-% Chrom
- 0,19 Gew.-% Kupfer
- 0,04 Gew.-% Vanadium
- 0,08 Gew.-% Titan
- 0,010 Gew.-% Stickstoff
- 0,03 Gew.-% Aluminium
- 15 Gew.-ppm Bor
- Rest Eisen

### Beispiel 2

Es wurde eine Legierung hergestellt, die folgende Zusammensetzung hatte:
- 0,06 Gew.-% Kohlenstoff
- 1,82 Gew.-% Mangan
- 0,20 Gew.-% Silizium
- 0,011 Gew.-% Phosphor
- 0,012 Gew.-% Schwefel
- 0,15 Gew.-% Nickel
- 0,15 Gew.-% Kupfer
- 0,10 Gew.-% Titan
- 0,008 Gew.-% Stickstoff
- 0,025 Gew.-% Aluminium
- 30 Gew.-ppm Bor
- Rest Eisen

### Beispiel 3

Es wurde eine Legierung hergestellt, die folgende Zusammensetzung hatte:
- 0,07 Gew.-% Kohlenstoff
- 1,53 Gew.-% Mangan
- 0,27 Gew.-% Silizium
- 0,007 Gew.-% Phosphor
- 0,006 Gew.-% Schwefel
- 0,02 Gew.-% Nickel
- 0,02 Gew.-% Chrom
- 0,01 Gew.-% Kupfer
- 0,12 Gew.-% Titan
- 0,003 Gew.-% Stickstoff
- 100 Gew.-ppm Bor
- Rest Eisen

Die Erfindung wird nachfolgend anhand der beigefügten Zeichnungen näher erläutert. Die Darstellungen stellen keine Einschränkung auf die konkret gezeigte Ausführung dar, sondern dienen lediglich der Erläuterung eines Prinzips der Erfindung. Dabei sind gleiche oder gleichartige Bauteile mit denselben Bezugsziffern bezeichnet. Es zeigt:
- Figur 1:: einen Teilzusammenbau eines Kugelgelenkes,
- Figur 2: einen Querschnitt durch einen erfindungsgemäß Kugelzapfen,
- Figur 3: das Gefüge eines erfindungsgemäßen Kugelzapfens in vergrößerter Darstellung,
- Figur 4: das Mikrohärteprofil (HV1) durch eine Schweißverbindung zwischen dem Vergütungsstahl 23MnB4 und zwei verschiedener Schmelzen des erfindungsgemäßen Stahls,
- Figur 5: das Anlassschaubild des erfindungsgemäßen Stahls,
- Figur 6: einen umgeformten, jedoch rissfreien Kugelzapfen aus dem erfindungsgemäßen Stahl,
- Figur 7: ein Dauerfestigkeitsdiagramm des erfindungsgemäßen Stahls.

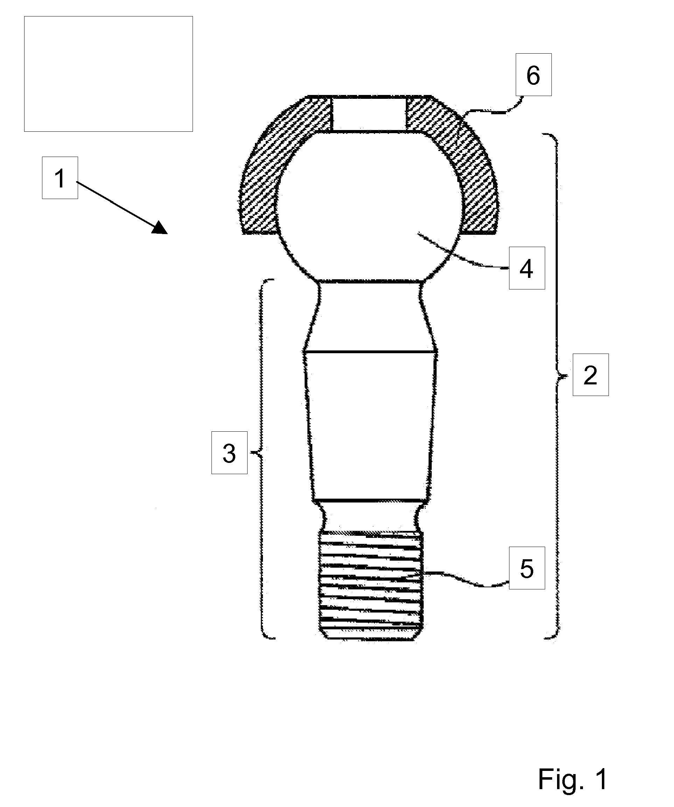

Figur 1 zeigt schematisch einen Teilzusammenbau 1 eines Kugelgelenks mit einem Kugelzapfen 2, der einen Schaftteil 3 mit einem Gewinde 5 umfasst, einen Kugelkopf 4 und eine Kugelschale 6 aufweist.

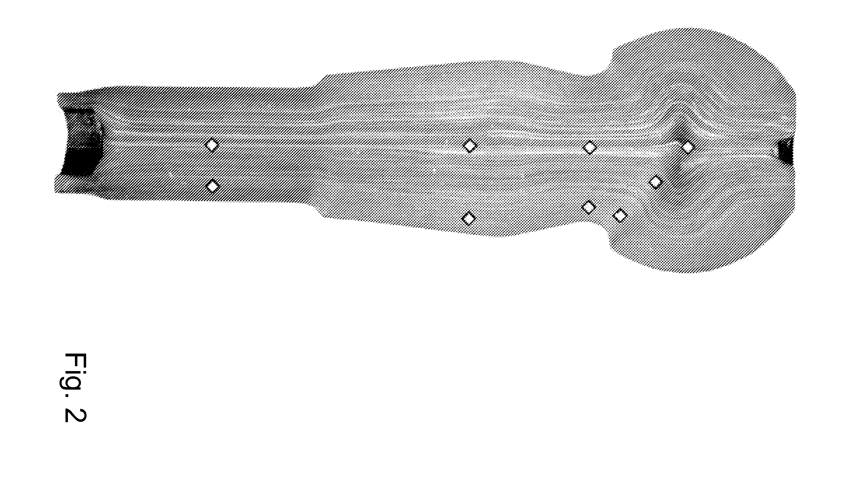

Figur 2 zeigt einen Querschnitt durch einen erfindungsgemäß hergestellten Kugelzapfen. Deutlich erkennbar sind hier die ausgeprägten Fleißlinien 7 des Stahlwerkstoffs. Ferner weist der Kugelzapfen 2 verschiedene angedeutete Messpunkte 8 für Härtemessungen auf, an denen bevorzugt Messungen durchgeführt werden können. In den Kugelkopf 4 ist eine Zentrierborung 10 eingelassen, wobei auf der gegenüberliegenden Seite des Kugelzapfens 2 ein Innensechskant 9 eingeformt wurde, der als Werkzeugeingriffsfläche dient. Durch die Makroätzung sind die Fließlinien 7 sichtbar geworden. Der Kugelzapfenrohling 2 ist dabei durch mehrstufiges Kaltumformverfahren direkt aus einem kalibrieren Draht abgepresst worden. Nach dem Pressen erfolgt die spanende Bearbeitung des Rohlings. Nach dem Pressen ist das Bauteil nicht vergütet beziehungsweise wärmebehandelt worden. Durch die Kaltumformung ergeben sich in dem Bauteil Zugfestigkeiten von 860 MPa bis zu 1090 MPa. Die Zugfestigkeitsverteilung ist, anders als bei vergüteten Bauteilen, verfahrensbedingt inhomogen. Die Zugfestigkeiten sind aus Härtewerten, gemäß DIN EN ISO 18265 Tabelle A1, umgewertet worden, wobei hier verschiedene Messpunkte 8 für Härtemessungen gezeigt sind. Die Zugfestigkeit des Standartwerkstoffs erreicht Werte von 850 MPa bis 1000 MPa.

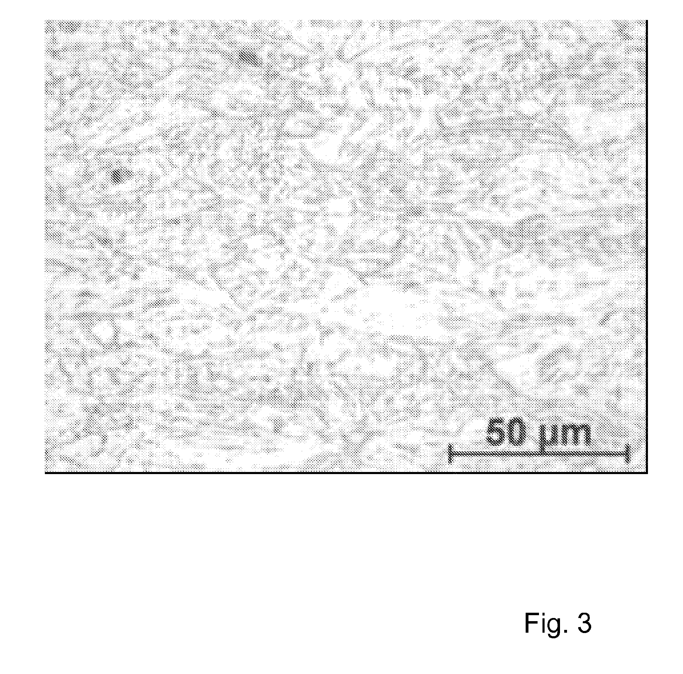

Figur 3 zeigt das Gefüge des erfindungsgemäßen Stahls, wie er zuvor als "Beispiel 1" definiert wurde, in einem Kugelzapfen. Der metallographische Schliff wurde aus einem Kugelzapfen heraus genommen. Das Gefüge besteht aus feinenkörnigem Bainit mit vereinzelten Ausscheidungen 11. Zum Vergleich anderer Gefüge siehe: "Das Zustandsschaubild Eisen-Kohlenstoff und die Grundlagen der Wärmebehandlung der Eisen-Kohlenstoff-Legierungen"; Verlag Stahleisen; Düsseldorf.

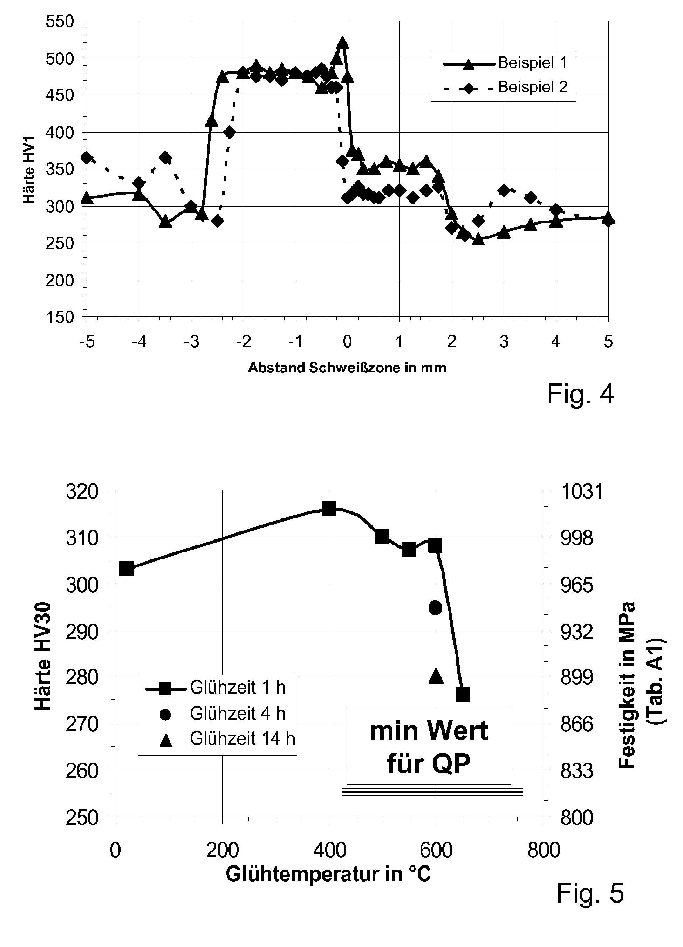

Figur 4 zeigt das Mikrohärteprofil (HV1) durch eine Schweißverbindung zwischen dem Vergütungsstahl 23MnB4 (linke Seite) und zweier verschiedener Schmelzen (siehe "Beispiel 1" und "Beispiel 2") des erfindungsgemäßen Stahls (rechte Seite). Der Abstand "null" auf der x-Achse ist die Kontaktstelle beider Materialien.

Aus den erfindungsgemäßen Stählen wurden kleine Gewindebolzen gepresst, auf die dann ideal rund geschliffene Kugeln aufgeschweißt wurden. Die Kugelform "normaler" Kugelzapfen ist am oberen Ende abgeplattet (s. Bild 1) und kann herstellungsbedingt nicht ohne Abplattung hergestellt werden. Für ein Kugelgelenk kann es vorteilhaft sein, wenn die Kugelform ideal rund ist. Dies ist nur möglich, wenn eine geschliffene Kugel auf einen Bolzen geschweißt wird.

Die Grundfestigkeit des bainitischen Stahls beträgt hier 280HV1 (Messpunkte rechts bei 5 mm Abstand Schweißzone). In Richtung Schweißzone, in der Wärmeeinflusszone (WEZ) nimmt die Härte geringfügig auf 250 HV1 ab, um in der Schweißzone (SZ) auf 300HV1 bis 350HV1 anzusteigen. Nach den allgemein üblichen schweißtechnischen Regeln soll die Härte in Schweißverbindungen den Wert von 350 HV nicht überschreiten, da dann die Schweißverbindung als zu spröde gilt. Die Härte in der Schweißzone in dem mit 0,2 Gew.-% Kohlenstoff moderat legierten Vergütungsstahl steigt auf über 500HV1 an. Wird der Vergütungsstahl 32CrB4 verschweißt, so ergeben sich Härtewerte von 550HV1 bis 600HV1. Hier wird der Vorteil des bainitischen Stahls gegenüber den Vergütungsstählen deutlich. Er härtet nur geringfügig in der Schweißzone auf. In dem Schaubild bedeutet "QT" quench tempered (=vergütet).

Figur 5 zeigt das Anlassschaubild des erfindungsgemäßen Stahls zu Beispiel 1. Gepresste Kugelzapfen wurden im Temperaturbereich von 400 °C bis 650 °C für 1 Stunde, 4 Stunden und 14 Stunden geglüht. Durch die Wärmebehandlung ändert sich die Festigkeit der Bauteile. Erst oberhalb von 600 °C kommt es zum nennenswerten Festigkeitsabfall. 14 Stunden bei 600 °C geglühte Zapfen besitzen bei Raumtemperatur noch Zugfestigkeiten von 880 MPa. Der Vergütungsstahl 41Cr4 hat nach Glühen bei 580 °C "nur" noch eine Festigkeit von 820 MPa. In dem Schaubild bedeutet "QP" quench polished (=Nitriert)

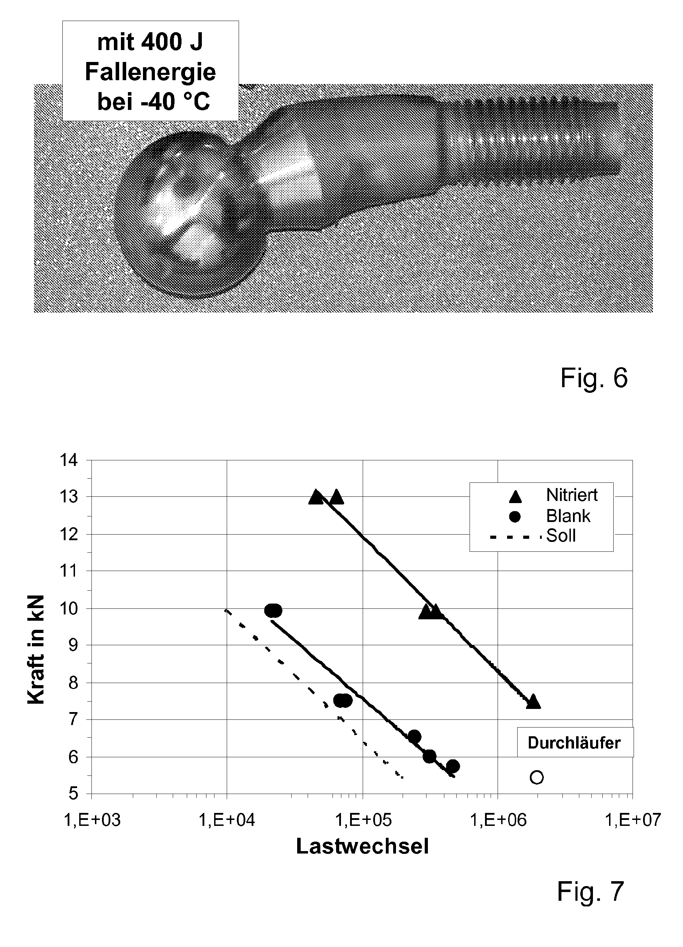

Da Kugelzapfen sicherheitskritische Bauteile sind, dürfen sie sich auch bei -40 °C im Schadensfall nur plastisch verformen und keine Risse zeigen. Figur 6 zeigt einen bei -40 °C dynamisch mit 400 J umgeformten, jedoch rissfreien Kugelzapfen aus dem erfindungsgemäßen Stahl zu Beispiel 1. Die erfindungsgemäßen Stähle sind für den Einsatz als Kugelzapfenwerkstoff sehr duktil.

Neben der statischen und dynamischen Belastung werden die Kugelzapfen auch zyklisch belastet. Figur 7 zeigt das Dauerfestigkeitsdiagramm (Wöhlerkurve) des erfindungsgemäßen Stahls zu Beispiel 1 nach dem Pressen (blank) und nach dem nitrocarborieren (Nitriert) im Vergleich zur Sollvorgabe. Bedingt durch die beim Nitrieren erzeugte Druckeigenspannung auf der Bauteiloberfläche sind die Dauerfestigkeiten hier besonders groß. Aber auch nicht nitrierte Kugelzapfen erfüllen die Sollvorgabe.

### Bezugszeichenliste

- 1: Teilzusammenbau Kugelgelenk
- 2: Kugelzapfen
- 3: Schaftteil
- 4: Kugelkopf
- 5: Gewinde
- 6: Kugelschale
- 7: Fließ linien
- 8: Mögliche Messpunkte
- 9: Innensechskant
- 10: Zentrierbohrung
- 11: Ausscheidungen

## Patentansprüche

1. Kugelzapfen aus einem Stahl mit bainitischem Gefüge folgender Zusammensetzung in Gewichtsprozent:
- 0,05 bis 0,15 Kohlenstoff
- 0,10 bis 0,4 Silizium
- 1,0 bis 2,5 Mangan
- 0,0015 (15 ppm) bis 0,0120 (120 ppm) Bor
- 0,06 bis 0,15 Titan
- in Summe 0,06 bis 0,30 der Elemente Vanadium, Niob, Titan,
- bis zu 0,08 Molybdän
- bis zu 0,25 Chrom
- bis zu 0,05 Aluminium
- bis zu 0,25 Nickel
- bis zu 0,25 Kupfer
- gegebenenfalls Stickstoff, jedoch kleiner als 0,012
- der Rest Eisen sowie stahlübliche Verunreinigungen.

2. Kugelzapfen nach Anspruch 1, wobei das bainitische Gefüge eine Zementit-freie Mikrostruktur aufweist, welche überwiegend besteht aus einem bainitischen Sekundärgefüge mit Ausscheidungen des Typs MX und darin eingelagert ein Anteil von insgesamt kleiner 20 Volumenprozent Restaustenit- oder Martensitbereiche, wobei M = Vanadium, Niob und/oder Titan und X = Kohlenstoff oder Stickstoff.

3. Kugelzapfen nach Anspruch 1 oder 2, **dadurch gekennzeichnet, dass** der Kohlenstoffgehalt im Bereich von 0,06 bis 0,12 Gew.-% liegt.

4. Kugelzapfen nach einem der Ansprüche 1 bis 3, **dadurch gekennzeichnet, dass** der Siliziumgehalt im Bereich von 0,15 bis 0,30 Gew.-% liegt.

5. Kugelzapfen nach einem der Ansprüche 1 bis 4, **dadurch gekennzeichnet, dass** der Mangangehalt im Bereich von 1,4 bis 2,0 Gew.-% liegt.

6. Kugelzapfen nach einem der Ansprüche 1 bis 5, **dadurch gekennzeichnet, dass** der Niobgehalt kleiner 0,03 Gew.-% ist.

7. Kugelzapfen nach einem der Ansprüche 1 bis 6, **dadurch gekennzeichnet, dass** der Stahl zusätzlich mindestens eines der folgenden Elemente in Gewichtsprozent enthält:
- 0,05 bis 0,25 Nickel
- min. 0,30 Summe Nickel und Kupfer
- 0,05 bis 0.25 Chrom
- 0,005 bis 0,05 Aluminium.

8. Verfahren zur Herstellung von Kugelzapfen nach einem der Ansprüche 1 bis 7, umfassend mindestens die Schritte:
- Schmelzen des Stahls
- Gießen des Stahls im Block- oder Strangguss
- Warmwalzen
- gesteuerte Abkühlung nach dem Warmwalzen
- Kaltziehen
- Fließpressen.

9. Verfahren nach Anspruch 8, **dadurch gekennzeichnet, dass** nach dem Warmwalzen die Abkühlung in Raten erfolgt, die größer als 1 K/s sind, um zu erreichen dass im Stahl mindestens 80% Bainit entsteht.

10. Verfahren nach einem der Ansprüche 8 oder 9, **dadurch gekennzeichnet, dass** der Stahl normalisierend gewalzt wird mit einer Endwalztemperatur um 1000°C.

11. Verfahren nach einem der Ansprüche 8 oder 9, **dadurch gekennzeichnet, dass** der Stahl thermomechanisch gewalzt wird mit einer Endwalztemperatur um 800°C.

12. Verfahren nach einem der Ansprüche 8 bis 11, **dadurch gekennzeichnet, dass** die Rohlinge nur durch Kaltverfestigung eine Festigkeit von mehr als 850 MPa aufweisen.

13. Verfahren nach einem der Ansprüche 8 bis 12, **dadurch gekennzeichnet, dass** nach dem Warmwalzen ein Kaltzug von größer 5% zur Einstellung der Drahtfestigkeit erfolgt.

14. Verfahren nach einem der Ansprüche 9 bis 13, **dadurch gekennzeichnet, dass** die Abkühlrate nach dem Warmwalzen größer 3 K/s ist, um zu erreichen, dass die Kerbschlagarbeit bei -40 °C an ISO-V-Proben nach der gesteuerten Abkühlung und vor dem Kaltziehen größer 60 J ist.

15. Verfahren nach einem der Ansprüche 8 bis 14, **dadurch gekennzeichnet, dass** der Kugelzapfen aus mindestens zwei Teilen besteht, von denen mindestens ein Teil dem Stahl mit bainitischem Gefüge entspricht und die Teile durch ein Schweißverfahren gefügt werden.

## Claims

1. Ball pins made of a steel with a bainitic microstructure with the following composition in weight percent:
- 0,05 to 0,15 carbon
- 0,10 to 0,4 silicon
- 1,0 to 2,5 manganese
- 0,0015 (15 ppm) to 0,0120 (120 ppm) boron
- 0,06 to 0,15 titanium
- in total 0,06 to 0,30 of the elements vanadium, niobium, titanium
- up to 0,08 molybdenum
- up to 0,25 chromium
- up to 0,05 aluminum
- up to 0,25 nickel
- up to 0,25 copper
- optionally nitrogen, but less than 0,012
- the residue being iron and impurities usually contained in steel.

2. Ball pins according to claim 1, wherein the bainitic microstructure comprises a cementite-free microstructure which consists predominantly of a bainitic secondary microstructure with precipitates of the type MX and a total fraction of less than 20 volume percent of residual austenite or martensite domains embedded therein, wherein M is vanadium, niobium and/or titanium and X is carbon or nitrogen.

3. Ball pins according to claim 1 or 2, **characterized in that** the carbon content is in the range of 0,06 to 0,12 wt.-%.

4. Ball pins according to one of claims 1 to 3, **characterized in that** the silicon content is in the range of 0,15 to 0,30 wt.-%.

5. Ball pins according to one of claims 1 to 4, **characterized in that** the manganese content is in the range of 1,4 to 2,0 wt.-%.

6. Ball pins according to one of claims 1 to 5, **characterized in that** the niobium content is smaller than 0,03 wt.-%.

7. Ball pins according to one of claims 1 to 6, **characterized in that** the steel further comprises at least one of the following elements by weight percent:
- 0,05 to 0,25 nickel
- at least 0,30 total sum of nickel and copper
- 0,05 to 0.25 chromium
- 0,005 to 0,05 aluminum.

8. A method for manufacturing of ball pins according to one of claims 1 to 7, comprising at least the following steps:
- melting the steel
- casting the steel by block casting or strand casting
- hot-rolling
- controlled cooling after the hot-rolling
- cold drawing
- extruding.

9. The method according to claim 8, **characterized in that**, after hot-rolling, the cooling takes place at rates that are greater than 1 K/s in order to form a steel with at least 80% bainite.

10. The method according to one of claims 8 or 9, **characterized in that** the steel is subjected to normalized rolling with an end rolling temperature of about 1000°C.

11. The method according to one of claims 8 or 9, **characterized in that** the steel is subjected to thermomechanical rolling with an end rolling temperature of about 800°C.

12. The method according to one of claims 8 to 11, **characterized in that** the blanks have a strength of more than 850 MPa by cold hardening only.

13. The method according to one of claims 8 to 12, **characterized in that** after hot-rolling, a cold draw of greater than 5% is carried out for adjusting the wire strength.

14. The method according to one of claims 9 to 13, **characterized in that** after hot-rolling the cooling rate is greater than 3 K/s in order to achieve that the notched bar impact value at -40 °C of ISO-V-samples after controlled cooling and before cold drawing is greater than 60 J.

15. The method according to one of claims 8 to 14, **characterized in that** the ball pin consists of at least two parts, of which at least one part corresponds to the steel with bainitic microstructure, the parts being joined by means of a welding method.

## Revendications

1. Pivot à rotule en acier à réseau bainitique ayant la composition pondérale en pourcentage, suivante :
- 0,05 à 0,15 carbone
- 0,10 à 0,4 silicium
- 1,0 à 2,5 manganèse
- 0,0015 (15 ppm) à 0,0120 (120 ppm) bore
- 0,06 à 0,15 titane
- en tout 0,06 à 0,30 des éléments : vanadium, niobium, titane
- jusqu'à 0,08 molybdène
- jusqu'à 0,25 chrome
- jusqu'à 0,05 aluminium
- jusqu'à 0,25 nickel
- jusqu'à 0,25 cuivre
- le cas échéant, de l'azote mais avec une teneur inférieure à 0,012
- le reste de fer et des impuretés habituelles de l'acier.

2. Pivot à rotule selon la revendication 1,
**caractérisé en ce que**
le réseau bainitique a une microstructure sans cémentite qui se compose principalement d'un réseau secondaire bainitique avec des précipités de type MX et des insertions d'une fraction en tout inférieures à 20% en volume, de zones résiduelles d'austenite ou de martensite, avec M = vanadium, niobum et/ ou titane et X = carbone ou azote.

3. Pivot à rotule selon la revendication 1 ou 2,
**caractérisé en ce que**
la teneur en carbone est dans une plage comprise entre 0,06-0,12 % pondéraux.

4. Pivot à rotule selon l'une des revendications 1 à 3,
**caractérisé en ce que**
la teneur en silicium est dans une plage comprise entre 0,15-0,30 % pondéraux.

5. Pivot à rotule selon l'une des revendications 1 à 4,
**caractérisé en ce que**
la teneur en manganèse est dans une plage comprise entre 1,4 et 2,0 % pondéraux.

6. Pivot à rotule selon l'une des revendications 1 à 5,
**caractérisé en ce que**
la teneur en niobium est inférieure à 0,03 % pondéraux.

7. Pivot à rotule selon l'une des revendications 1 à 6,
**caractérisé en ce que**
l'acier contient au moins l'un des éléments suivants en pourcentages pondéraux :
- 0,05 - 0,25 nickel
- Min. 0,30 de la somme de nickel et de cuivre
- 0,05-0,25 chrome
- 0,005 jusqu'à 0,05 aluminium.

8. Procédé de fabrication de pivot à rotule selon l'une des revendications 1 à 7,
comprenant les étapes suivantes consistant à :
- fondre l'acier,
- couler l'acier par coulée en lingotières ou coulée continue,
- laminer à chaud,
- refroidir de manière commandée après le laminage à chaud,
- étirage à froid,
- formage par fluage.

9. Procédé selon la revendication 8,
**caractérisé en ce qu'**
après le laminage à chaud, le refroidissement se fait suivant des taux supérieurs à 1 K /s pour qu'il se forme au moins 80% de bainite dans l'acier.

10. Procédé selon l'une des revendications 8 ou 9,
**caractérisé en ce que**
l'acier est laminé de façon normalisée avec une température finale de laminage autour de 1000°C.

11. Procédé selon l'une des revendications 8 ou 9,
**caractérisé en ce qu'**
on lamine l'acier de manière thermomécanique avec une température finale de laminage voisine de 800°C.

12. Procédé selon l'une des revendications 1 à 11,
**caractérisé en ce que**
les ébauches seulement par renforcement à froid ont une résistance mécanique supérieure à 850 MPa.

13. Procédé selon l'une des revendications 8 à 12,
**caractérisé en ce qu'**
après le laminage à chaud, on effectue un étirage à froid supérieur à 5% pour régler la résistance du fil.

14. Procédé selon l'une des revendications 9 à 13,
**caractérisé en ce que**
le taux de refroidissement après le laminage à chaud est supérieur à 3K/s pour que l'énergie de choc à -40°C selon le procédé ISO-V après le refroidissement commandé et avant l'étirage à froid sont supérieur à 60 J.

15. Procédé selon l'une des revendications 8 à 14,
**caractérisé en ce que**
le pivot à rotule se compose d'au moins deux parties dont au moins une partie correspond à de l'acier avec un réseau bainitique et de parties assemblées par soudage.
